# FASCICULE DE BREVET EUROPEEN

(11) **EP 1 719 701 B1**
(45) Date de publication et mention de la délivrance du brevet: **09.01.2008**
(21) Numéro de dépôt: 06290655.7
(22) Date de dépôt: 21.04.2006
(51) Int. Cl.: B64D 11/06, B64D 25/04, B60N 2/42

(54) **Siège d'aéronef de sécurité**
Sicherheitsflugsitz
Aircraft anti-crash seat

(30) Priorité: 03.05.2005 FR 0504499
(43) Date de publication de la demande: 08.11.2006
(73) Titulaire: Société Industrielle et Commerciale de Matériel Aéronautique, F-36100 Issoudun (FR)
(72) Inventeur: Mercier, Bertrand, 36100 Issoudun (FR); Luneau, Etienne, 36260 Saint Lizaigne (FR)
(74) Mandataire: Bredema

(56) Documents cités:
- FR-A- 2 389 045
- GB-A- 998 535
- GB-A- 1 259 198
- US-A- 4 150 805
- US-A- 5 692 705
- US-B1- 6 237 889

## Description

La présente invention concerne un siège d'aéronef de sécurité, et plus particulièrement un tel siège comprenant une structure de support et un baquet porté par ladite structure, ledit baquet comportant une assise et un dossier reliés entre eux, ledit dossier étant monté sur ladite structure coulissant généralement vers le bas.

On connaît de tels sièges par le document US-A-5842669. Ce document décrit un siège "anti-crash", c'est-à-dire un siège permettant d'absorber l'énergie cinétique de l'occupant en cas de forte accélération verticale, par déformation d'un absorbeur de choc. Ainsi, le choc subi par l'occupant reste inférieur à une valeur acceptable pour une accélération de valeur prédéterminée. Dans le document précité, l'absorbeur de choc est constitué par la partie de structure sur laquelle coulisse le dossier. Cette solution présente toutefois l'inconvénient que la structure elle-même est détruite dans le choc et qu'elle doit donc être remplacée.

La présente invention vise à pallier cet inconvénient.

Le document FR-A-2389045 décrit des sièges « anti-crash » conformes au préambule de la revendication 1.

Plus particulièrement, l'invention a pour but de fournir un siège de sécurité dans lequel un minimum d'éléments est détruit en cas d'accident.

A cet effet, l'invention a tout d'abord pour objet un siège d'aéronef de sécurité comprenant une structure de support et un baquet porté par ladite structure, ledit baquet comportant une assise et un dossier reliés entre eux, ledit dossier étant monté sur ladite structure coulissant généralement vers le bas, caractérisé par le fait qu'il comprend au moins une biellette articulée à une première de ses extrémités sur ledit support et à son autre extrémité sur ladite assise, ladite biellette étant généralement horizontale en utilisation normale, et étant apte à pivoter vers le bas à sa première extrémité sous l'effet d'un effort exercé vers le bas sur ladite assise, contre l'action d'un absorbeur de choc.

Ainsi, en cas d'accident, seul l'absorbeur de choc doit être remplacé, la structure du siège n'étant pas endommagée.

De préférence, ledit dossier est monté coulissant sur ladite structure de support par au moins un linéaire annulaire entre la structure de support et ledit dossier.

L'absorbeur de choc peut être de tout type convenable. II peut par exemple absorber l'énergie par déformation permanente en rotation de l'articulation de la biellette sur la structure.

Toutefois, dans un mode de réalisation particulier, ledit absorbeur de choc est un absorbeur linéaire dont une première extrémité est fixée à ladite structure de support et l'autre extrémité à ladite biellette.

Plus particulièrement, ledit absorbeur linéaire peut être un organe de traction dont ladite première extrémité est fixée à ladite structure de support au-dessus du point d'articulation de ladite biellette.

Egalement dans un mode de réalisation particulier, ladite structure de support comprend une partie fixe et une partie mobile, ladite partie mobile étant montée de façon réglable coulissante généralement verticalement sur ladite partie fixe, ladite biellette étant articulée à sa première extrémité sur ladite partie mobile.

Il est ainsi possible de régler le siège en hauteur.

Plus particulièrement, ledit baquet et ladite partie mobile peuvent être montés coulissant sur ladite partie fixe sensiblement dans la même direction.

On peut envisager l'utilisation d'une seule biellette, installée par exemple sous l'assise du baquet.

Toutefois, dans un mode de réalisation particulier, le siège selon l'invention comprend deux biellettes latérales chacune articulée d'un des côtés de ladite assise.

Un point d'attache de ceinture de sécurité peut être monté sur l'articulation à la structure de support d'au moins l'une desdites biellettes latérales.

Dans un autre mode de réalisation, un point d'attache de ceinture de sécurité est monté sur ledit baquet, ledit point d'attache étant relié par une autre biellette à l'articulation à la structure de support d'au moins l'une desdites biellettes latérales, ladite autre biellette étant agencée pour se déformer en cas de choc.

Ainsi, la biellette reprend les efforts de la ceinture de sécurité, sauf en cas d'accident où l'absorbeur de choc entre en action.

Dans un mode de réalisation particulier, l'ensemble constitué de la structure de support, du baquet et de l'absorbeur de choc est précontraint lors de son montage.

La précontrainte peut par exemple être obtenue par des interfaces de type vis - écrou à au moins une des extrémité de l'absorbeur.

Selon différentes variantes, le siège comprend en outre une ou plusieurs ceintures de sécurité de type ventrale, harnais, ou entre-jambe, fixées au niveau de points d'attaches sur la structure de support ou sur le baquet.

L'invention a également pour objet un aéronef comportant au moins un siège tel que décrit ci-dessus.

On décrira maintenant, à titre d'exemple non limitatif, un mode de réalisation particulier de l'invention, en référence aux dessins schématiques annexés dans lesquels :
- la figure 1 est une vue de côté du siège selon l'invention en position de vol;
- la figure 2 est une vue à plus grande échelle de la structure de support portant le baquet du siège selon l'invention en position de vol;
- La figure 3 est une vue schématique de coté su siège anti-crash selon l'invention.
- la figure 4 est une vue de côté du siège selon l'invention avant et après l'absorption suite à un crash;
- la figure 5 est une vue à plus grande échelle de la structure de support portant le baquet du siège selon l'invention suite à un crash ;
- La figure 6 est une vue schématique du siège anti-crash selon l'invention dans un mode de réalisation où le baquet est réglable en hauteur.
- La figure 7 est une vue de côté d'un siège selon l'invention dans un mode de réalisation particulier dans lequel le baquet est réglable en hauteur.
- La figure 8 est une vue de côté d'un siège selon l'invention dans un mode de réalisation particulier.

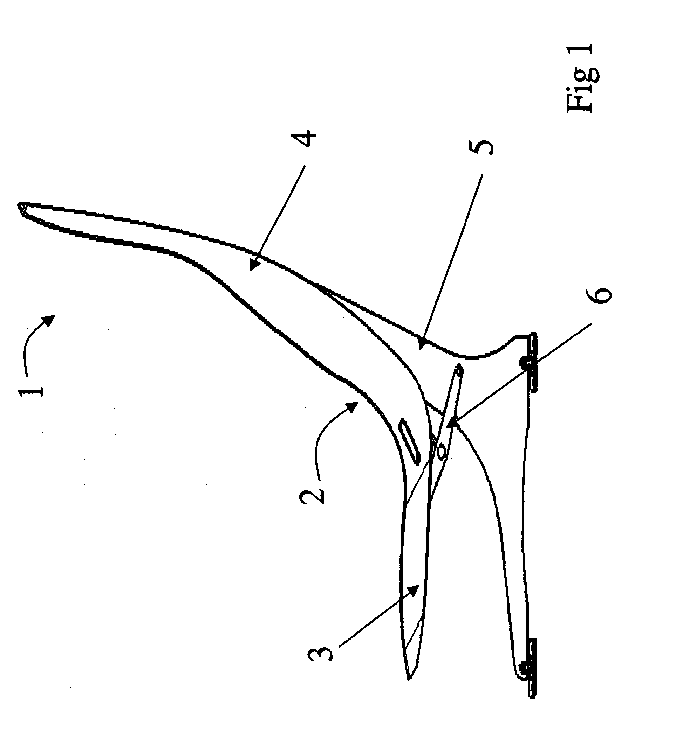

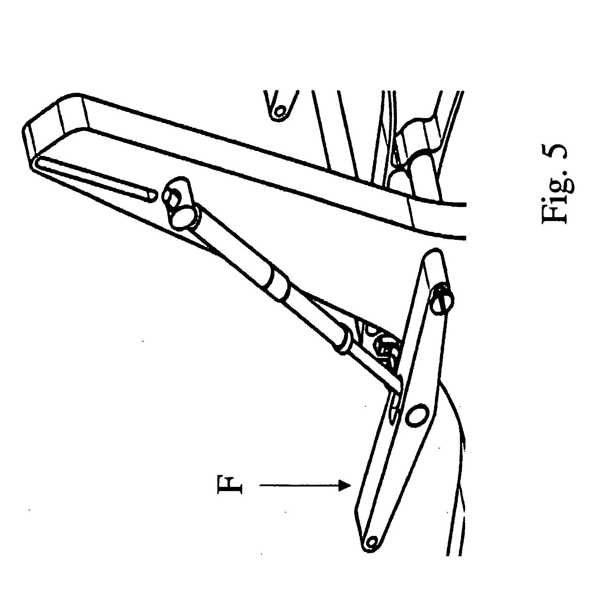

En relation avec les figures 1 à 8, on décrit un siège 1 d'aéronef de sécurité. De façon connue en soi, un tel siège 1 comprend un baquet 2 comprenant une assise 3 et un dossier 4, reliés entre eux. Le baquet 2 est porté par une structure de support 5.

Cette structure de support 5 est par exemple composée de deux montants usinés fixes par rapport aux interfaces de l'appareil dans lequel le siège selon l'invention est monté, de deux traverses tubulaires reliant les deux montants entre eux, et des interfaces avec le sol de l'appareil.

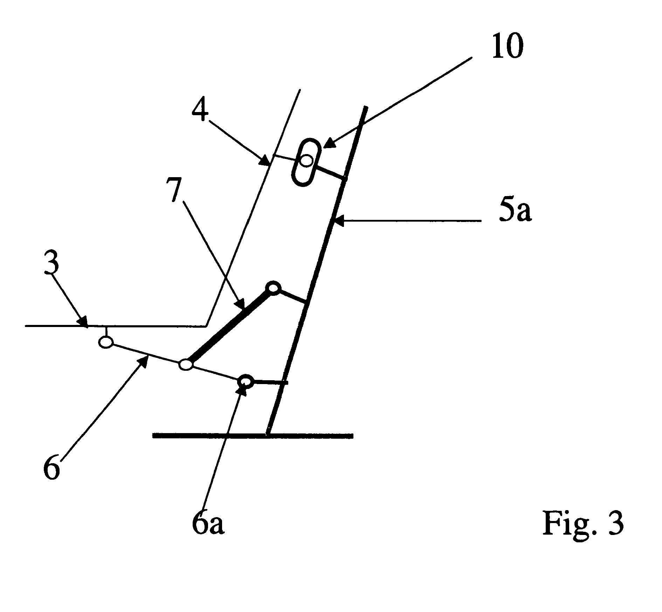

Comme illustré schématiquement figure 3, le baquet est monté coulissant sur par rapport à la structure de support 5 par l'intermédiaire d'un ou plusieurs linéaires annulaires 10 positionnés entre les montants de la structure 5 et le dossier 4. de préférence, lorsque la structure 5 comprend deux montants usinés fixes, on positionne deux linéaires annulaires entre le baquet et les montants, un par montant, par un axe fixé sur le baquet et traversant un oblong dans les montants.

Selon l'invention, le siège comprend également au moins une biellette 6 articulée par une liaison pivot à une première de ses extrémités 6a sur la structure de support 5, et à une seconde de ses extrémités 6b sur l'assise 3. Selon une variante, la liaison de l'articulation de la biellette au niveau des extrémités peut également être une liaison rotule.

Le positionnement et le nombre de biellettes utilisée peut varier selon l'invention. De préférence, on utilise deux biellettes latérales chacune articulée d'un des côtés de assise 3, mais on peut envisager l'utilisation d'une seule biellette, par exemple montée sous l'assise 3 du baquet 2.

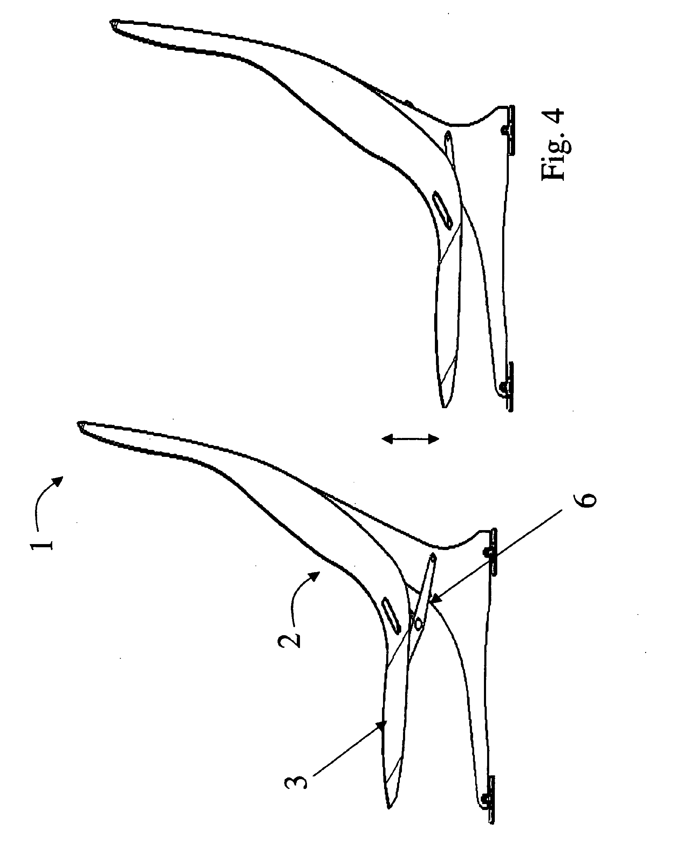

La biellette 6 est apte à pivoter par articulation au niveau de son extrémité 6a fixée à la structure de support 5. Par un tel pivot, le siège 1 selon l'invention passe alors d'une position haute à une position basse comme sur la figure 4, la biellette 6 quittant sa position sensiblement horizontale par pivot, ce qui permet le mouvement du baquet 2.

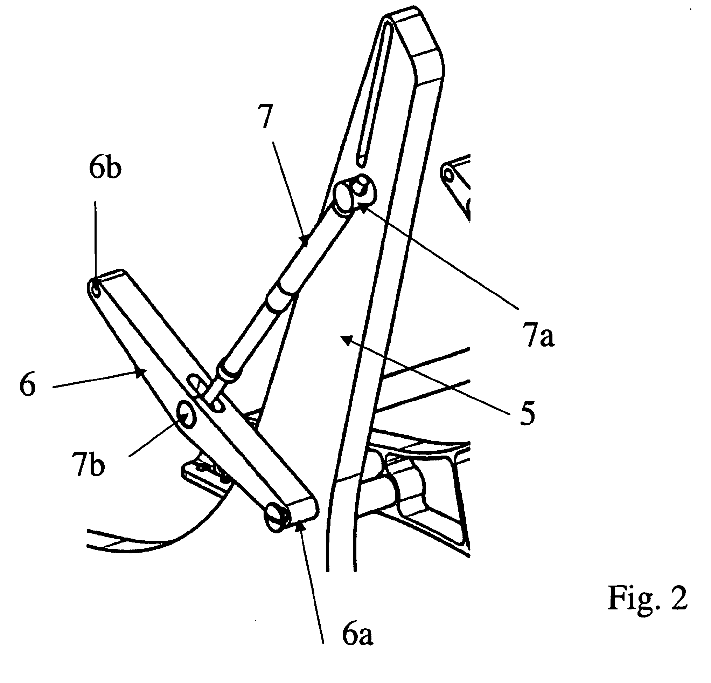

Illustré plus en détail figure 2, le siège 1 selon l'invention comprend également au moins un absorbeur de choc 7 dont une première extrémité 7a est reliée à la structure de support 5, et une seconde extrémité 7b est reliée à la biellette 6.

Les liaisons au niveau des extrémités de l'absorbeur de choc sont de façon générale des liaisons pivot, mais peuvent également être des liaisons de type rotule.

Lors d'un accident, le choc provoque l'application d'une force F vers le bas sur le siège 1 qui tend à abaisser le siège dans la position basse telle qu'illustrée figure 4. Dans ce cas, l'absorbeur 7 absorbe de façon permanente, une partie de l'énergie issue du choc. Cet absorbeur peut alors être de tout type convenable, et par exemple absorber l'énergie par déformation permanente en rotation de l'articulation de la biellette 6 sur la structure 5.

Ceci peut être réalisé de façon non limitative par déformation plastique d'une chambre cylindrique provoquée par le déplacement dans celle-ci d'un piston de diamètre supérieur.

Comme illustré figure 2, les absorbeurs de choc 7 selon l'invention sont de préférence linéaires.

Les caractéristiques de l'absorbeur 7 sont adaptés à toutes les populations utilisatrices du siège selon l'invention.

Selon un mode de réalisation particulier, l'absorbeur 7 est un absorbeur linéaire sous la forme d'un organe de traction dont la première extrémité 7a est fixée à la structure de support 5 au-dessus du point d'articulation de la biellette 6 de façon à retenir celle-ci dans son pivot en cas d'application d'une force vers le bas.

Selon une variante, l'ensemble structure 5, baquet 2 et absorbeur 7 est précontraint lors du montage afin de constituer un ensemble rigide. Ceci est par exemple réalisé par des interfaces vis-écrou au niveau d'au moins une des extrémités 7a, 7b, de l'absorbeur, les écrous étant serrés jusqu'à obtention d'un assemblage rigide.

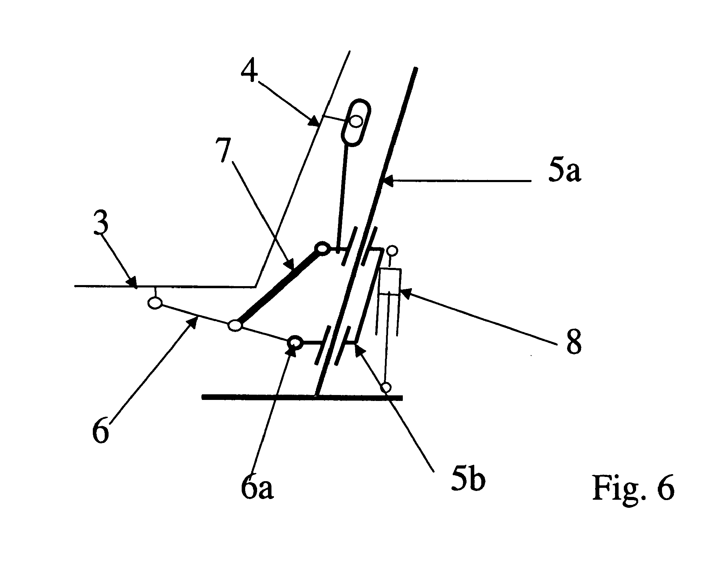

Selon un mode de réalisation illustré plus spécifiquement de façon schématique figure 6, la structure de support 5 comprend une partie fixe 5a, et une partie mobile 5b. La partie mobile 5b est montée de façon réglable coulissante généralement verticalement sur la partie fixe 5a et la biellette 6 est articulée à sa première extrémité 6a sur la partie mobile 5b.

On monte de préférence le baquet 2 et la partie mobile 5b de façon coulissante sensiblement dans la même direction de façon à rendre le siège 1 réglable en hauteur lorsqu'une commande de réglage est déverrouillée.

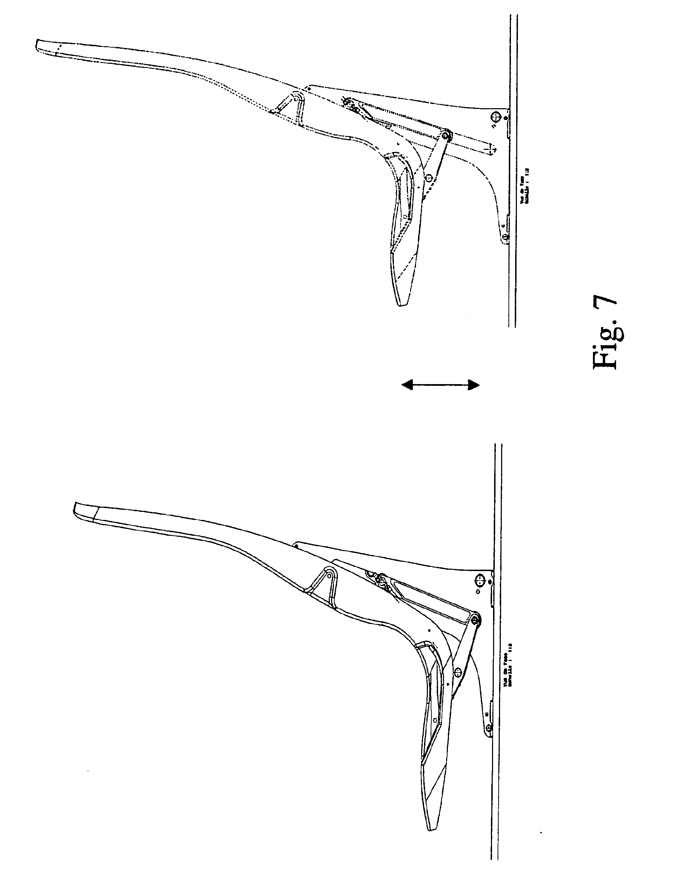

Un ou plusieurs vérins de poussée 8 assurent le levage du baquet 2 lorsque la commande est déverrouillée. Le réglage est assuré soit par incréments réguliers, par exemple de type pions dans une crémaillère, soit en continu par un blocage hydraulique accouplé aux vérins. L'ajustement vertical est alors réalisé comme sur la figure 7.

Pendant le crash, le blocage du réglage est suffisant pour transmettre les composantes des efforts verticaux aux absorbeurs 7.

La présente invention permet avantageusement de positionner différentes ceintures de sécurité associées au siège. Selon un premier mode de réalisation, un point d'attache de ceinture est situé au niveau de l'articulation à la structure 5 de la biellette 6.

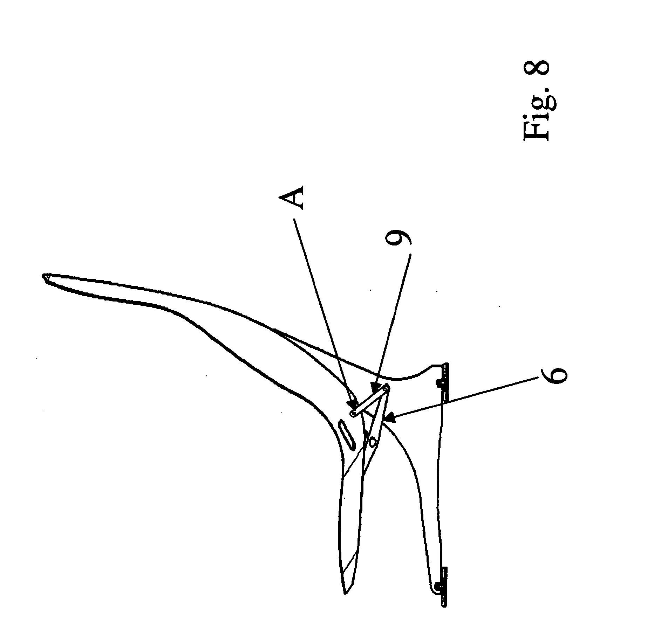

Selon un autre mode de réalisation illustré plus spécifiquement figure 8, le baquet 2 comprend un point d'attache A de ceinture de sécurité. Ce point d'attache A est relié par une seconde biellette 9 à l'extrémité de liaison entre la première biellette 6 et la structure de support 5.

Cette seconde biellette est agencée pour flamber en cas de choc, lors de l'affaissement du système.

Il est entendu que différents types de ceinture peuvent être utilisés en combinaison avec la présente invention, et en particulier des ceintures ventrales avec deux points d'attache, des ceintures ventrales et un harnais à un ou deux brins avec trois ou quatre points d'attache, et éventuellement, avec cinq points d'attache un ensemble de ceinture ventrale, harnais, et entre-jambe. Dans ce cas, les points d'attache peuvent être positionnés soit au niveau du baquet 2, soit au niveau de la structure 5.

Il est entendu que dans tous ses modes de réalisation, le siège 1 selon l'invention est apte à être utilisé dans un aéronef, en particulier de type hélicoptère ou avion, soit pour le siège pilote soit pour le siège passager. Tout type de finition et d'accessoires peuvent également être utilisés en combinaison avec la présente invention.

## Revendications

1. - Siège (1) d'aéronef de sécurité comprenant une structure de support (5), un baquet (2) porté par ladite structure et au moins une biellette (6), ledit baquet comportant une assise (3) et un dossier (4) reliés entre eux, ledit dossier étant monté sur ladite structure coulissant généralement vers le bas, ladite au moins une biellette (6) étant articulée à une première de ses extrémités (6a) sur ledit support et à son autre extrémité (6b) sur ladite assise, ladite au moins une biellette (6) étant apte à pivoter vers le bas à sa première extrémité sous l'effet d'un effort exercé vers le bas sur ladite assise **caractérisé par le fait que** ladite biellette est sensiblement horizontale en utilisation, et est apte à pivoter vers le bas à sa première extrémité contre l'action d'un absorbeur de choc (7) en traction, ledit absorbeur de choc (7) ayant une première extrémité (7a) fixée à ladite structure de support (5) et l'autre extrémité (7b) à ladite biellette (6).

2. - Siège (1) d'aéronef de sécurité selon la revendication 1, dans lequel ledit absorbeur de choc (7) est un absorbeur linéaire.

3. - Siège d'aéronef selon la revendication 2, dans lequel ladite première extrémité de l'absorbeur linéaire est fixée à ladite structure de support au-dessus du point d'articulation de ladite biellette.

4. - Siège d'aéronef selon l'une quelconque des revendications 1 à 3, dans lequel ledit dossier est monté coulissant sur ladite structure de support par au moins un linéaire annulaire (10).

5. - Siège d'aéronef selon l'une quelconque des revendications 1 à 4, dans lequel ladite structure de support comprend une partie fixe (5a) et une partie mobile (5b), ladite partie mobile étant montée de façon réglable coulissante généralement verticalement sur ladite partie fixe, ladite biellette étant articulée à sa première extrémité sur ladite partie mobile.

6. - Siège d'aéronef selon l'ensemble des revendications 1 et 5, dans lequel ledit baquet (2) et ladite partie mobile (5b) sont montés coulissant sur ladite partie fixe sensiblement dans la même direction.

7. - Siège d'aéronef selon l'une quelconque des revendications 1 à 6, comprenant deux biellettes latérales chacune articulée d'un des côtés de ladite assise.

8. - Siège d'aéronef selon la revendication 7, comprenant un point d'attache de ceinture de sécurité sur l'articulation à la structure de support d'au moins l'une desdites biellettes latérales.

9. - Siège d'aéronef selon la revendication 7, comprenant un point d'attache de ceinture de sécurité sur ledit baquet, ledit point d'attache étant relié par une autre biellette (9) à l'articulation à la structure de support d'au moins l'une desdites biellettes latérales, ladite autre biellette étant agencée pour se déformer en cas de choc.

10. **-** Siège d'aéronef selon la revendication 8 ou 9, comprenant en outre une ceinture de sécurité ventrale, un harnais ou une ceinture de type entre-jambe.

11. - Siège d'aéronef selon l'une quelconque des revendications 1 à 10, dans lequel l'ensemble constitué de la structure de support, du baquet et de l'absorbeur de choc est rendu rigide par précontrainte lors de son montage.

12. - Siège d'aéronef selon l'ensemble des revendications 2 et 11, dans lequel la précontrainte est obtenue par des interfaces de type vis - écrou à au moins une des extrémité de l'absorbeur.

13. - Aéronef **caractérisé par le fait qu'**il comporte au moins un siège pilote selon l'une quelconque des revendications 1 à 12.

14. **-** Aéronef **caractérisé par le fait qu'**il comporte au moins un siège passager selon l'une quelconque des revendications 1 à 12.

## Claims

1. An aircraft safety seat (1) comprising a support structure (5), a pan (2) carried by said structure and at least one link (6), said pan including a seat (3) and a back (4) connected together, said back being mounted on said structure to slide generally downwards, said at least one link (6) being articulated at one of its ends (6a) on said support and at its other end (6b) on said seat, said at least one link (6) being capable of pivoting downwards at its first end under a stress exerted downwards onto said seat, **characterized in that** said link is substantially horizontal when used, and is capable of pivoting downwards at its first end under the action of a shock absorber (7) in traction, said shock absorber (7) having a first end (7a) fixed to said support structure (5) and the other end (7b) to said link (6).

2. An aircraft safety seat (1) according to claim 1, wherein said shock absorber (7) is a linear absorber.

3. An aircraft seat according to claim 2, wherein said first end of the linear absorber is fixed to said support structure above the articulation point of said link.

4. An aircraft seat according to any one of claims 1 to 3, wherein said back is mounted to slide on said support structure by means of at least one annular linear connection (10).

5. An aircraft seat according to any one of claims 1 to 4, wherein said support structure comprises a fixed part (5a) and a mobile part (5b), said mobile part being adjustably and generally vertically mounted to slide on said fixed part, said link being articulated at its first end on said mobile part.

6. An aircraft seat according to all the claims 1 to 5, wherein said pan (2) and said mobile part (5b) are mounted to slide on said fixed part substantially in the same direction.

7. An aircraft seat according to anyone of claims 1 to 6 comprising two side links, each being articulated on one side of said seat.

8. An aircraft seat according to claim 7, comprising a safety belt fastening point on the articulation to the support structure of at least one of said side links.

9. An aircraft seat according to claim 7, comprising a safety belt fastening point on said pan, said fastening point being connected by another link (9) to the articulation of the support structure of at least one of said side links, said other link being so arranged as to lose its shape in case of a shock.

10. An aircraft seat according to claim 8 or 9, further comprising a safety belt, a harness or a crotch type safety belt.

11. An aircraft seat according to any one of claims 1 to 10 wherein the assembly composed of the support structure, the pan and the shock absorber is made rigid by pretensioning during the mounting.

12. An aircraft seat according to all the claims 2 and 11, wherein the pretensioning is obtained through interfaces of the screw-nut type at least at one of the ends of the absorber.

13. An aircraft **characterized in that** it includes at least one pilot seat according to any one of claims 1 to 12.

14. An aircraft **characterized in that** it includes at least one passenger seat according to any one of claims 1 to 12.

## Patentansprüche

1. - Sicherheitssitz (1) in einem Luftfahrzeug mit einer Tragstruktur (5), einer Sitzschale (2), die von der besagten Tragstruktur getragen wird, und mindestens einem Schwingarm (6), wobei die besagte Sitzschale eine Sitzfläche (3) und eine Rückenlehne (4) umfaßt, die untereinander verbunden sind, wobei die besagte Rückenlehne im allgemeinen nach unten gleitend auf die besagte Tragstruktur montiert ist, wobei mindestens ein Schwingarm (6) gelenkig mit einem ersten Ende (6a) auf die besagte Tragstruktur montiert ist, und an seinem anderen Ende (6b) auf die besagte Sitzfläche, wobei der besagte mindestens eine Schwingarm (6) fähig ist, an seinem ersten Ende unter Einwirkung einer nach unten auf die besagte Sitzfläche ausgeübten Kraft nach unten zu schwenken, **dadurch gekennzeichnet, daß** der besagte Schwingarm bei der Benutzung deutlich horizontal liegt und fähig ist, an seinem ersten Ende nach unten zu schwenken gegen die Aktion eines Stoßaufnehmers (7) in Zugbewegung, wobei der besagte Stoßaufnehmer (7) ein erstes Ende (7a) hat, das an der besagten Tragstruktur (5) befestigt ist, und das andere Ende (7b) an den besagten Schwungarm (6) befestigt ist.

2. - Sicherheitssitz (1) in einem Luftfahrzeug nach Anspruch 1, **dadurch gekennzeichnet, daß** der besagte Stoßaufnehmer (7) ein linearer Absorber ist.

3. - Sicherheitssitz in einem Luftfahrzeug nach Anspruch 2, **dadurch gekennzeichnet, daß** das besagte erste Ende des linearen Absorbers an der besagten Tragstruktur über dem Gelenkpunkt des besagten Schwungarms befestigt ist.

4. - Sicherheitssitz in einem Luftfahrzeug nach einem beliebigen der vorstehenden Ansprüche 1 bis 3, **dadurch gekennzeichnet, daß** die besagte Rückenlehne mit mindestens einem linearen ringförmigen Teil (10) auf die besagte Tragstruktur montiert ist.

5. - Sicherheitssitz in einem Luftfahrzeug nach einem beliebigen der vorstehenden Ansprüche 1 bis 4, **dadurch gekennzeichnet, daß** die besagte Tragstruktur einen feststehenden Teil (5a) und einen beweglichen Teil (5b) umfaßt, wobei der besagte bewegliche Teil verstellbar gleitend im allgemeinen senkrecht auf dem besagten feststehenden Teil montiert ist, wobei der besagte Schwingarm gelenkig mit seinem ersten Ende auf den besagten beweglichen Teil montiert ist.

6. - Sicherheitssitz in einem Luftfahrzeug nach allen Ansprüchen 1 und 5, **dadurch gekennzeichnet, daß** die besagte Sitzschale (2) und der besagte bewegliche Teil (5b) gleitend auf dem besagten feststehenden Teil deutlich in der gleichen Richtung montiert sind.

7. - Sicherheitssitz in einem Luftfahrzeug nach einem beliebigen der vorstehenden Ansprüche 1 bis 6, **dadurch gekennzeichnet, daß** er zwei seitliche Schwingarme umfaßt, die jeweils gelenkig mit einer der Seiten der besagten Sitzfläche montiert sind.

8. - Sicherheitssitz in einem Luftfahrzeug nach Anspruch 7, **dadurch gekennzeichnet, daß** er einen Befestigungspunkt für den Sicherheitsgurt an dem Gelenk an der Tragstruktur von mindestens einem der besagten seitlichen Schwingarme umfaßt.

9. - Sicherheitssitz in einem Luftfahrzeug nach Anspruch 7, **dadurch gekennzeichnet, daß** er einen Befestigungspunkt für den Sicherheitsgurt auf der besagten Sitzschale umfaßt, wobei der besagte Befestigungspunkt durch einen anderen Schwingarm (9) an das Gelenk an der Tragstruktur von mindestens einem der seitlichen Schwingarme verbunden ist, wobei der besagte andere Schwingarm so gestaltet ist, daß er sich bei Stoß verformt.

10. - Sicherheitssitz in einem Luftfahrzeug nach Anspruch 8 oder 9, **dadurch gekennzeichnet, daß** er ferner einen Bauchsicherheitsgurt, ein Geschirr oder einen Gurt von der Art mit Befestigung zwischen den Beinen umfaßt.

11. - Sicherheitssitz in einem Luftfahrzeug nach einem beliebigen der vorstehenden Ansprüche 1 bis 10, **dadurch gekennzeichnet, daß** die aus der Tragstruktur, der Sitzschale und dem Stoßaufnehmer gebildete Baugruppe bei ihrer Montage durch Vorspannung starr gemacht wird.

12. - Sicherheitssitz in einem Luftfahrzeug nach allen Ansprüchen 2 und 11, **dadurch gekennzeichnet, daß** die Vorspannung durch Schnittstellen von der Art Schraube - Schaubenmutter an mindestens einem der Enden des Absorbers erzielt wird.

13. - Luftfahrzeug, **dadurch gekennzeichnet, daß** es mindestens einen Pilotensitz nach einem beliebigen der vorstehenden Ansprüche 1 bis 12 umfaßt.

14. - Luftfahrzeug, **dadurch gekennzeichnet, daß** es mindestens einen Passagiersitz nach einem beliebigen der vorstehenden Ansprüche 1 bis 12 umfaßt.
